# FASCICULE DE BREVET EUROPEEN

(11) **EP 1 658 119 B1**
(45) Date de publication et mention de la délivrance du brevet: **25.01.2012**
(21) Numéro de dépôt: 03799625.3
(22) Date de dépôt: 18.12.2003
(51) Int. Cl.: A63F 13/02

(54) **SYSTEME DE JEU A COMMANDE PERFECTIONNEE DE DEPLACEMENT D' OBJETS VIRTUELS AFFICHES**
SPIELSYSTEM ZUM VERSCHIEBEN VON ANGEZEIGTEN VIRTUELLEN OBJEKTEN
GAME SYSTEM WITH ENHANCED CONTROL FOR MOVING DISPLAYED VIRTUAL OBJECTS

(30) Priorité: 18.12.2002 FR 0216074
(43) Date de publication de la demande: 24.05.2006
(73) Titulaire: Sylvius, 75017 Paris (FR)
(72) Inventeur: MADIGOU, Fabrice, F-78570 Andresy (FR)
(74) Mandataire: Plaçais, Jean Yves
(86) Numéro de dépôt international: PCT/FR2003/003791
(87) Numéro de publication internationale: WO 2004/056433

(56) Documents cités:
- EP-A- 1 060 772
- EP-A- 1 249 260
- US-A- 5 929 846
- US-A- 6 162 123
- US-A1- 2002 175 897

## Description

La présente invention concerne d'une façon générale les dispositifs d'entrée pour simulateurs et jeux électroniques, connus en particulier sous la dénomination de « manettes de jeu ».

Les manettes de jeux actuellement connues possèdent un cordon de liaison électrique vers un connecteur d'entrée d'une console de jeu, ou encore d'un ordinateur, et nécessitent, pour déplacer un personnage ou objet mobile affiché sur l'écran dans le cadre de l'exécution du jeu, l'appui par l'utilisateur sur un ou plusieurs boutons suivant la direction voulue.

Ce procédé exige un certain apprentissage de la part de l'utilisateur car le déplacement de l'objet n'est pas intuitif. En effet, lorsqu'on observe un débutant (enfant ou adulte) effectuant de telles manipulations, on observe une certaine maladresse à faire correspondre les actions du ou des doigts au déplacement voulu.

On connaît également des équipements de jeu électronique spécialisés, capables de convertir des mouvements d'un équipement portable (manche d'épée virtuelle, têtière) en des actions de commande de jeu électronique. Les documents US-6 162 123 A, EP-1 249 260 A, US 2002/0175897 A et EP-1 060 772 A donnent des exemples de tels équipements.

Toutefois, toutes ces approches connues sont des approches lourdes relatives à des jeux dédiés, typiquement des jeux dits « d'arcade » pour lieux publics, et leur mise en oeuvre est complexe.

En outre, si l'on souhaitait utiliser ces équipements avec plusieurs types de jeux différents, il faudrait multiplier les actionneurs dédiés en effectuant les adaptations nécessaires.

La présente invention vise à remédier à ces problèmes, et à proposer un dispositif d'entrée qui reste un dispositif d'entrée standard, simple et économique, pour des types divers de jeu électronique, et qui soit capable de provoquer des déplacements d'un objet ou personnage virtuel mobile sur l'écran de visualisation d'une manière particulièrement intuitive, et donc facile à commander, en plus des commandes d'action telles que des boutons de déplacement prévues habituellement sur le dispositif d'entrée.

Un autre objet encore de l'invention est de permettre d'utiliser des boutons de déplacement directionnel en soi conventionnels, mais dont l'action dépend de l'orientation de la manette par rapport à l'écran.

Elle propose à cet effet selon un premier aspect un système de jeu électronique, comprenant une unité centrale de traitement, un dispositif d'affichage et au moins un actionneur d'entrée universel déplaçable, apte à être tenu en mains et apte à engendrer des informations de commande standard pour une pluralité de programmes de jeux électroniques aptes chacun à être exécutés par l'unité de traitement, caractérisé en ce qu'il comprend des moyens d'émission/réception de signaux entre une partie fixe du système et ledit actionneur, des moyens de traitement aptes à déterminer des données de temps de parcours des signaux transmis pour élaborer une ou plusieurs informations de position et/ou d'orientation de l'actionneur, et des moyens de commande aptes à appliquer à l'unité de traitement des commandes basées sur la ou les informations de position et/ou d'orientation pour agir sur le déplacement d'objets virtuels affichés sur le dispositif d'affichage.

L'information de position peut être absolue ou relative.

Certains aspects préférés, mais non limitatifs, de ce système sont les suivantes :
- les moyens d'émission/réception prévus sur la partie fixe du système comprennent des émetteurs ou récepteurs prévus au voisinage du dispositif d'affichage.
- le système comprend au moins un récepteur sur la partie fixe et au moins un émetteur sur l'actionneur, ledit émetteur étant apte à émettre en outre vers l'unité centrale via ledit récepteur une information d'identification d'actionneur.
- le système comprend en outre sur l'actionneur un émetteur apte à émettre vers l'unité centrale via un récepteur prévu sur la partie fixe une information d'actionnement déterminée à partir d'un élément actionnable prévu sur l'actionneur.
- le système comprend une pluralité d'émetteurs sur la partie fixe et une pluralité de récepteurs sur l'actionneur.
- les moyens de traitement sont aptes à déterminer les variations de position de l'actionneur par rapport à la partie fixe selon cinq degrés de liberté.
- les moyens de traitement sont aptes à déterminer les variations de position de l'actionneur par rapport à la partie fixe selon six degrés de liberté.
- l'actionneur comprend trois émetteurs ou récepteurs non alignés.

Selon un deuxième aspect, l'invention propose un actionneur universel d'entrée déplaçable, apte à être tenu en mains, pour appliquer des signaux de commande à un système de jeu électronique comprenant une unité centrale de traitement et un dispositif d'affichage, caractérisé en ce qu'il comprend des moyens d'émission de signaux par transmission sans fil à partir d'au moins deux émetteurs situés à distance l'un de l'autre sur l'actionneur, lesdits émetteurs émettant des signaux distincts aptes à permettre une détermination de la position et/ou de l'orientation de l'actionneur à partir d'au moins deux récepteurs fixes.

Dans une forme de réalisation, l'actionneur comprend une partie de commande de déplacement se déplaçant par rapport à une autre partie, les émetteurs sont fixés sur la partie de commande de déplacement, et au moins un récepteur est fixé sur ladite autre partie.

L'invention propose également un actionneur universel d'entrée déplaçable, apte à être tenu en mains, pour appliquer des signaux de commande à un système de jeu électronique comprenant une unité centrale de traitement et un dispositif d'affichage, caractérisé en ce qu'il comprend des moyens de réception de signaux par transmission sans fil au niveau d'au moins un récepteur, le récepteur étant apte à recevoir des signaux distincts émis par au moins deux émetteurs fixes pour permettre une détermination de la position et/ou de l'orientation de l'actionneur.

Dans une forme de réalisation, l'actionneur comprend une partie de commande de déplacement se déplaçant par rapport à une autre partie, en ce que le ou chaque récepteur est fixés sur la partie de commande de déplacement, et en ce qu'au moins un émetteur est fixé sur ladite autre partie.

D'autres aspects, buts et avantages de la présente invention apparaîtront mieux à la lecture de la description détaillée suivante des formes de réalisation préférée de celle-ci, donnée à titre d'exemple non limitatif et faite en référence aux dessins annexés, sur lesquels :
Les figures 1a et 1b sont des schémas en perspectives illustrant deux exemples de mise en oeuvre de l'invention,
Les figures 2a et 2b sont des schémas en perspective illustrant deux exemples de réalisation d'une manette selon l'invention,
La figure 3 est une vue d'ensemble en perspective schématique d'une plateforme électronique de jeu et d'un ensemble de manettes,
La figure 4 est une vue analogue à la figure 3 avec une manette supplémentaire, les manettes étant pourvues de boutons de commande directionnelle,
La figure 5 est un schéma fonctionnel d'une partie électronique d'une manette de jeu selon l'invention,
La figure 6 est un schéma fonctionnel d'une partie de l'électronique d'une plateforme de jeu apte à coopérer avec une telle manette,
La figure 7 est un schéma fonctionnel plus détaillé de cette partie de l'électronique,
La figure 8 illustre schématiquement l'application de la présente invention à un dispositif d'entrée du type volant de pilotage virtuel, et
La figure 9 illustre schématiquement l'application de l'invention à un dispositif d'entrée du type manche à balai.

On notera à titre préliminaire que l'invention s'applique en particulier à une plateforme électronique de jeu telle que décrite dans le document WO 02 20110 A au nom de la Demanderesse, mais qu'elle s'applique aussi tout à fait bien à des systèmes de jeu électronique à écran vertical.

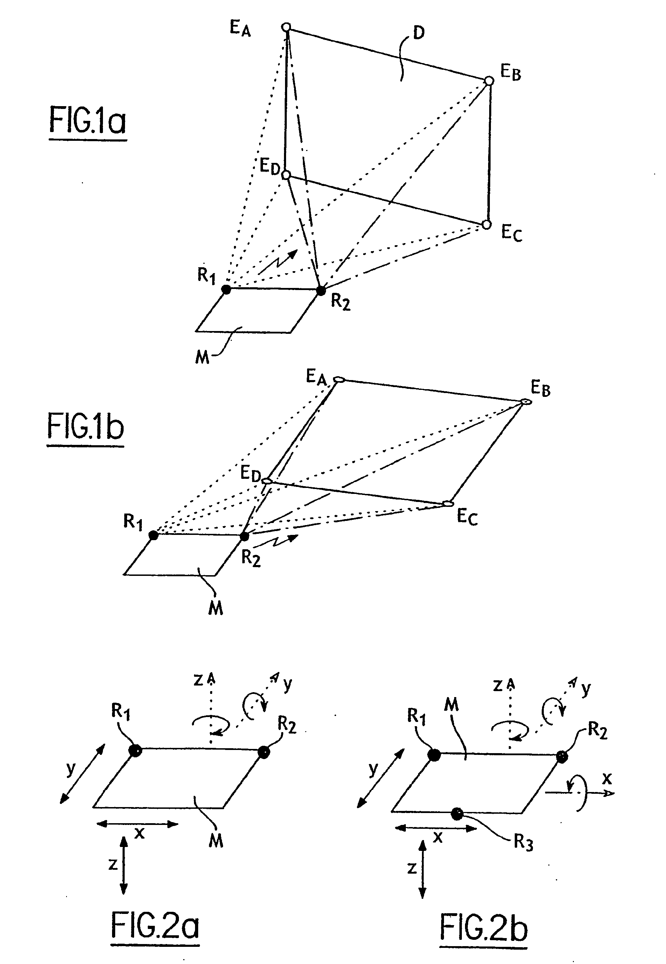

En référence tout d'abord à la figure 1a, on a représenté schématiquement la partie écran d'affichage D d'un système électronique pour jeux, tels que jeux d'action, jeux de société, etc., l'écran étant ici orienté verticalement sensiblement face à un jour.

Ce système comprend, de préférence autour de l'écran D, en l'espèce quatre émetteurs E_{A} à E_{D} de signaux (signaux radiofréquence, infrarouges, ondes ultrasoniques, etc.) capables de se propager à une vitesse déterminée jusqu'à une manette M. En l'espèce, ces émetteurs sont disposés dans la région des quatre coins de l'écran D, mais de nombreux autres agencements sont possibles.

La manette de jeu M possède ici deux récepteurs R₁ et R₂ aptes à recevoir les signaux émis respectivement par les quatre émetteurs, ces récepteurs étant ici situés dans la région des côtés opposés de la manette, symétriquement par rapport à un plan axial de celle-ci.

La figure 1b illustre le fait que le même système peut être mis en oeuvre avec un écran d'affichage D placé à l'horizontale, comme décrit dans le document WO 02 20110 A précité.

Les émetteurs E_{A} à E_{D} fournissent quatre signaux distincts, qui sont écoutés par les récepteurs R₁ et R₂.

On sait que le temps qui s'écoule entre l'émission d'un signal donné par l'un des émetteurs et la réception du même signal par l'un des récepteurs est proportionnel à la distance séparant l'émetteur et le récepteur considéré. Par traitement de signal basé sur des instants de réception d'un même signal émis par les différents récepteurs, le système est donc capable de déterminer la distance précitée. Et le recours à plusieurs émetteurs et à plusieurs récepteurs, et à une pluralité de distances mesurées associées, permet d'en déduire la position et/ou l'orientation de la manette M prise dans sa globalité par rapport aux émetteurs E_{A} à E_{D} et donc par rapport à l'écran. Afin de ne pas alourdir inutilement la description, on ne décrira pas ici les différents calculs qui permettent d'obtenir les données de position et/ou d'orientation de la manette ; de tels calculs, faisant appel à la géométrie classique, sont en effet à la portée de l'homme du métier.

Si de telles mesures sont effectuées à fréquence élevée, par exemple de 10 à 100 fois par seconde, le système détermine la variation dynamique des distances et en déduit les mouvements de la manette M exercés par l'utilisateur par rapport à l'écran D.

Dans une première forme de réalisation, les calculs de position et/ou d'orientation de la manette M sont effectués dans une unité de traitement située dans la manette elle-même.

Dans une seconde forme de réalisation, la manette se borne à transmettre au système de jeu, par liaison filaire ou sans fil, les données temporelles représentatives des instants auxquels sont reçus, par les récepteurs respectifs R₁ et R₂, les signaux émis par les émetteurs respectifs E_{A} à E_{D}.

On notera ici que le recours à deux récepteurs R₁ et R₂ disposés sur des côtés opposés et à au moins trois émetteurs permet de calculer la position et l'orientation de la manette suivant cinq degrés de liberté, comme l'illustre la figure 2a des dessins, à savoir une translation suivant trois axes orthogonaux x, y et z (z étant la verticale, x la direction latérale et y la direction avant/arrière - par rapport à l'utilisateur), et une rotation autour des axes y et z, seule la rotation autour de l'axe x, parallèle à la droite rejoignant les deux récepteurs, ne pouvant pas être prise en compte.

Selon une variante, et maintenant en référence à la figure 2b, on peut déterminer les translations/rotations selon les six degrés de liberté possibles en prévoyant sur la manette M un troisième récepteur R₃, pour autant qu'il soit décalé des récepteurs R₁ et R₂ suivant l'axe y et/ou suivant l'axe z. En l'occurrence, alors que les récepteurs R₁ et R₂ sont situés latéralement à gauche et à droite au niveau de la face « avant » de la manette (la plus éloignée de l'utilisateur), le récepteur R₃ se trouve au milieu de sa face opposée ou arrière.

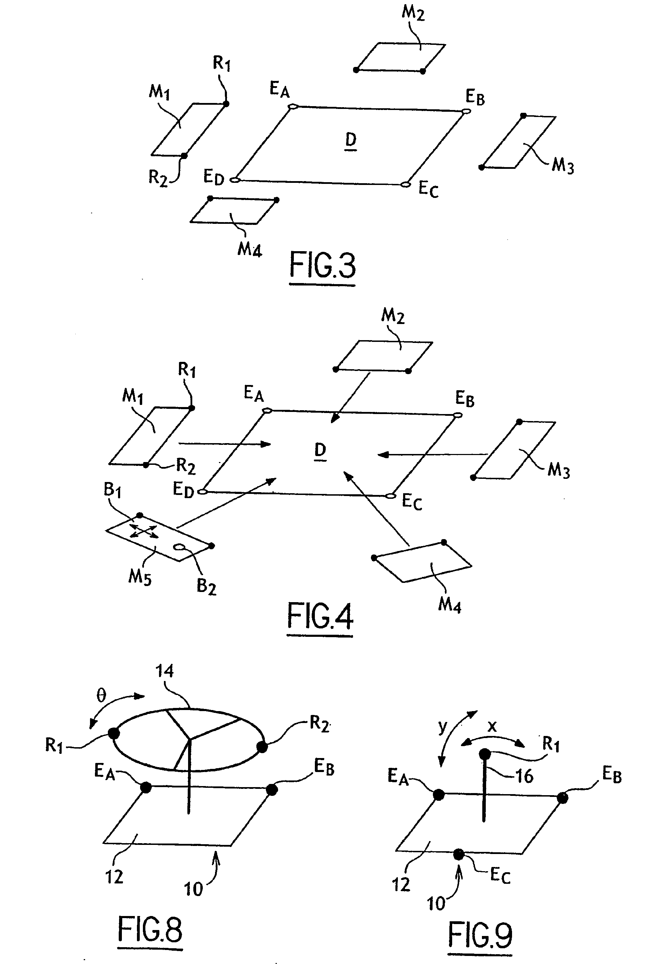

Avantageusement, la manette M comprend également un ou plusieurs boutons (voir B₁ et B₂ sur la manette M₅ sur la figure 4), à savoir des boutons traditionnels (boutons directionnels, manche à balai, touches d'action, etc.) et/ou des boutons destinés à influer sur le processus de détermination de la position initiale et de l'orientation de la manette M.

On peut en particulier prévoir un bouton permettant d'activer/désactiver la détermination de la position de la manette selon le processus décrit ci-dessus.

Comme on l'a indiqué plus haut, une liaison de préférence sans fil permet à la manette M de fournir au système électronique de jeu (plateforme, console dédiée ou encore ordinateur personnel) les informations sur sa position selon tout ou partie des six degrés de liberté par rapport aux émetteurs et donc à l'écran, ainsi que les actions ou informations nécessaires au fonctionnement du système.

Avantageusement, et maintenant en référence à la figure 3, le système permet l'utilisation d'une pluralité de manettes, ici quatre manettes M₁ à M₄.

On prévoit dans ce cas que la communication de chaque manette avec le système est différenciée (elle l'est naturellement avec une liaison filaire, elle l'est par exemple par simple adjonction d'un identificateur dans les messages transmis). Ainsi les données de position ou données temporelles transmises par chaque manette au système central sont bien respectivement affectées aux différentes manettes.

Les actions de déplacement d'un objet mobile virtuel affiché sur l'écran D en fonction des mouvements en translation et/ou en rotation de la manette peuvent être très variés.

On peut ainsi prévoir les affectations suivantes :

| Mouvement manette | Mouvement objet |
|---|---|
| Rotation /z | diriger gauche droite |
| Translation /y | accélérer/freiner |
| Rotation /x | monter/descendre |
| Translation /x | pas de côté |
| etc. | |

Comme on l'a indiqué, il peut être souhaitable de conserver une commande classique par boutons directionnels (B₁ sur la figure 4) sur la manette en coopération avec un écran disposé horizontalement. Dans ce cas, on peut prévoir de positionner la manette de jeu dans une direction prédéfinie. Puis, par une action sur un bouton déterminé, on mémorise cette position horizontale afin que les actions sur les boutons directionnels agissent dans des directions qui tiennent compte de la position mémorisée de la manette.

Par exemple, dans le cas de la figure 4, supposons qu'un cinquième joueur doté d'une manette M₅ vienne s'adjoindre à un groupe de quatre joueurs utilisant respectivement les manettes M₁ à M₄, sur le même côté de la plateforme électronique que le joueur ayant la manette M₄.

La détermination de la position de la manette M₅ par rapport au système permet de faire en sorte que, lorsque ce cinquième joueur utilise les boutons directionnels avant/arrière/gauche/droite de sa manette, les mouvements correspondants de l'objet mobile sur l'écran D se produisent suivant les mêmes directions par rapport au point d'observation où se trouve ledit joueur.

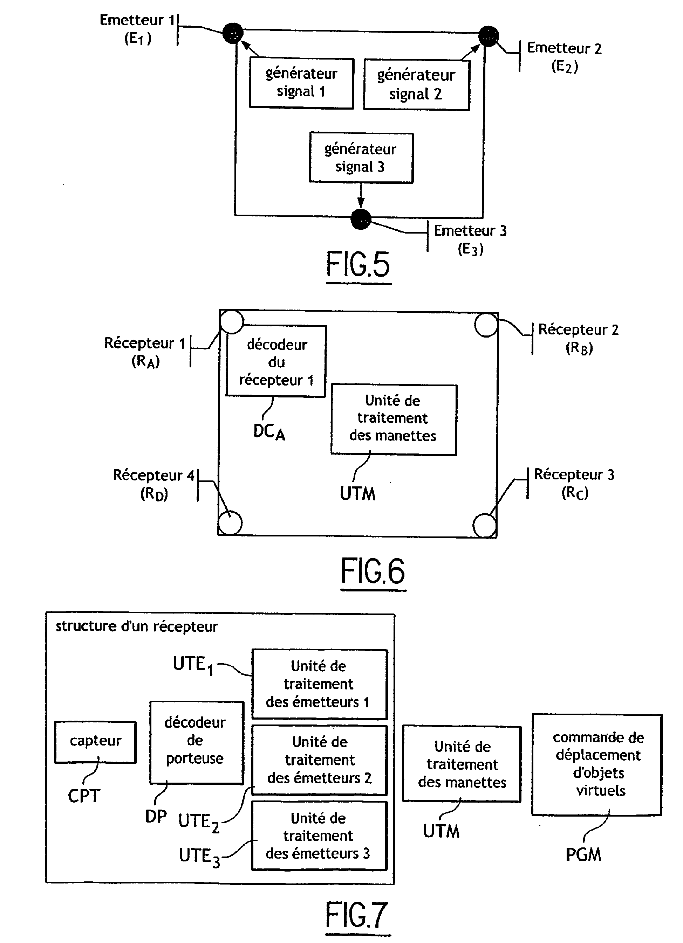

Selon une variante de réalisation, on peut prévoir que les émetteurs de signaux se trouvent sur les manettes, et que les récepteurs correspondants soient fixes, et de préférence proches de l'écran. Ainsi, comme l'illustre la figure 5, la manette M est ici dotée de trois émetteurs E₁ à E₃ respectivement reliées à trois générateurs de signaux GS₁ à GS₃.

De manière à différentier les signaux qui pourraient être émis par plusieurs manettes, on prévoit que chaque manette envoie des signaux différents.

La figure 6 illustre quant à elle la région de l'écran d'affichage D, entourée par quatre récepteurs R_{A} à R_{D} situés dans la région de ses quatre coins. A chaque récepteur est associé un circuit décodeur, seul le circuit DC_{A} associé au récepteur R_{A} étant représenté sur la figure. Chaque circuit décodeur est relié à une unité de traitement des manettes UTM qui reçoit les signaux des circuits décodeurs est engendre des données de position/orientation des manettes respectives, utilisées comme données d'entrée dans le programme de jeu associé.

A partir des composantes temporelles contenues dans les signaux reçus, l'unité de traitement UTM calcule dynamiquement la distance entre chaque émetteur et chaque récepteur, et à partir de ces distances les mouvements opérés par l'utilisateur, pour engendrer des données d'entrée vers l'application de jeu exécutée par le système.

Dans cette approche, les émetteurs situés sur les manettes sont également avantageusement utilisés pour transmettre d'autres informations tels que des évènements de manipulation de boutons, de manche à balai, etc., ici encore à destination de l'application de jeu.

Comme on l'a dit, la mesure de distance peut se faire par différentes techniques de transmission en utilisant notamment de signaux infrarouges, ultrasonores, radiofréquence, etc.

Préférentiellement, dans le cas où les émetteurs sont situés sur les manettes M, chaque émetteur envoie un train d'impulsions sur une porteuse de fréquence différente, ce train d'impulsions formant un code spécifique identifiant la manette de façon unique.

Ainsi la porteuse identifie l'émetteur considéré parmi la pluralité d'émetteurs, tandis que les impulsions identifient la manette.

Côté récepteur, et maintenant en référence à la figure 7, chaque récepteur comprend un capteur CPT choisi en fonction de la technologie considérée, et un décodeur de porteuse DP permet de séparer les différentes porteuses provenant de chacun des deux émetteurs ou davantage.

Il est prévu en outre autant d'unités de traitement d'émetteurs, en l'occurrence au nombre de trois et désignés par UTE₁, UTE₂ et UTE₃, qui sont aptes chacune à calculer la distance entre l'émetteur associé et le récepteur considéré.

Maintenant en référence à la figure 8, on a représenté un dispositif d'entrée 10 du type volant pour pilotage virtuel, avec une base 12 et un volant rotatif 14. Le volant porte deux récepteurs R1 et R2 et la base porte deux émetteurs Ea et Eb. Un calcul périodique basés sur le temps de parcours de signaux entre les émetteurs et les récepteurs permet, par des calculs mathématiques à la portée de l'homme du métier, de déterminer l'évolution de l'angle de rotation θ du volant 14 par rapport à la base 12. Les signaux électriques représentatifs de cette évolution sont appliqués aux programme de jeu ou de simulateur de conduite pour diriger le véhicule virtuel.

La figure 9 illustre un autre dispositif d'entrée 10, avec une base 12 et un manche à balai 16 susceptible de pivoter autour d'une articulation située à sa base, dans une direction x et dans une direction y. Le manche à balai possède à distance de son point d'articulation un récepteur R1, tandis que la base porte trois émetteurs EA, EB et EC. Ici encore, l'évolution des temps de parcours des signaux entre les trois émetteurs et le récepteur permet de déterminer la position du manche à balai et ses évolutions.

Bien entendu, dans ces formes de réalisation également, on peut inverser les émetteurs et les récepteurs.

De nombreuses variantes et modifications peuvent être apportées à l'invention.

Notamment, dans le cas d'une console de jeu dédiée dont l'écran d'affichage est un téléviseur ordinaire, les émetteurs ou récepteurs fixes et l'électronique de traitement associée sont préférentiellement situés au niveau de la console elle-même, ou sous forme d'un élément fixe séparé de ladite console et relié à elle.

## Revendications

1. Système de jeu électronique, comprenant d'une part une partie fixe comportant une unité centrale de traitement et un dispositif d'affichage (D), et d'autre part au moins un actionneur d'entrée universel déplaçable (M ; 14 ; 16), apte à être tenu en mains et apte à engendrer des informations de commande standard pour une pluralité de programmes de jeux électroniques aptes chacun à être exécutés par l'unité centrale de traitement, l'actionneur comprenant des boutons de commande directionnelle et/ou un manche à balai pour générer des informations de commande de déplacement, **caractérisé en ce qu'**il comprend, en sus desdits boutons et/ou manche à balai, des moyens d'émission/réception (Eₓ, Rᵢ ; Eᵢ, Rₓ) de signaux entre ladite partie fixe (D ; 12) du système et ledit actionneur (M), des moyens de traitement aptes à déterminer des données de temps de parcours des signaux transmis pour détecter différents types de mouvements de l'actionneur, incluant la rotation et la translation, et pour élaborer des informations de mouvement correspondantes, et des moyens de commande aptes à appliquer à l'unité centrale de traitement différents types de commandes basées sur lesdites informations de mouvement, de manière à générer différents types de mouvements d'objets virtuels affichés sur le dispositif d'affichage.

2. Système selon la revendication 1, **caractérisé en ce que** les moyens d'émission/réception prévus sur la partie fixe du système comprennent des émetteurs ou récepteurs prévus au voisinage du dispositif d'affichage.

3. Système de jeu selon l'une des revendications 1 et 2, **caractérisé en ce qu'**il comprend au moins un récepteur sur la partie fixe et au moins un émetteur sur l'actionneur, et **en ce que** ledit émetteur (Eᵢ) est apte à émettre en outre vers l'unité centrale via ledit récepteur une information d'identification d'actionneur.

4. Système de jeu selon l'une des revendications 1 à 3, **caractérisé en ce qu'**il comprend en outre sur l'actionneur un émetteur (Eᵢ) apte à émettre vers l'unité centrale via un récepteur prévu sur la partie fixe une information d'actionnement déterminée à partir d'un élément actionnable prévu sur l'actionneur.

5. Système de jeu selon l'une des revendications 1 et 2, **caractérisé en ce qu'**il comprend une pluralité d'émetteurs (Eₓ) sur la partie fixe et une pluralité de récepteurs (Rᵢ) sur l'actionneur.

6. Système selon l'une des revendications 1 à 5, **caractérisé en ce que** les moyens de traitement sont aptes à déterminer les variations de position de l'actionneur selon cinq degrés de liberté.

7. Système selon l'une des revendications 1 à 5, **caractérisé en ce que** les moyens de traitement sont aptes à déterminer les variations de position de l'actionneur selon six degrés de liberté.

8. Système selon l'une des revendications 1 et 2, **caractérisé en ce que** l'actionneur comprend trois émetteurs (E₁-E₃) ou récepteurs non alignés.

9. Actionneur universel d'entrée déplaçable (M ; 14 ; 16), apte à être tenu en main et apte à engendrer des informations de commande standard pour une pluralité de programmes de jeux électroniques aptes chacun à être exécutés par une unité centrale de traitement, l'actionneur comprenant des boutons de commande directionnelle et/ou un manche à balai pour générer des informations de commande de déplacement, **caractérisé en ce qu'**il comprend, en sus desdits boutons et/ou manche à balai, des moyens d'émission de signaux par transmission sans fil à partir d'au moins deux émetteurs (Eₓ) situés à distance l'un de l'autre sur l'actionneur, lesdits émetteurs émettant des signaux dont les temps de parcours sont aptes à être mesurés pour détecter différents types de mouvements de l'actionneur, incluant la rotation et la translation dans le but d'engendrer différents types de commandes basées sur lesdites informations de mouvement et générer différents types de mouvements d'objets virtuels dans des jeux exécutés dans ladite unité centrale de traitement.

10. Actionneur selon la revendication 9, **caractérisé en ce qu'**au moins un émetteur (E₁-E₃) est apte à émettre en outre une information d'identification d'actionneur.

11. Actionneur selon l'une des revendications 9 et 10, **caractérisé en ce qu'**au moins un émetteur (E₁-E₃) est apte à émettre en outre une information d'actionnement déterminée à partir d'un élément actionnable prévu sur l'actionneur.

12. Actionneur selon l'une des revendications 9 à 11, **caractérisé en ce qu'**il comprend une partie de commande de déplacement se déplaçant par rapport à une autre partie, **en ce que** les émetteurs sont fixés sur une première des parties et **en ce qu'**au moins un récepteur est fixé sur la seconde des parties.

13. Actionneur universel d'entrée déplaçable (M ; 14 ; 16), apte à être tenu en main et apte à engendrer des informations de commande standard pour une pluralité de programmes de jeux électroniques aptes chacun à être exécutés par une unité centrale de traitement, l'actionneur comprenant des boutons de commande directionnelle et/ou un manche à balai pour générer des informations de commande de déplacement, **caractérisé en ce qu'**il comprend, en sus desdits boutons et/ou manche à balai, des moyens pour recevoir au niveau d'au moins un récepteur (Rᵢ) des signaux distincts émis par transmission sans fil à partir d'au moins deux émetteurs (Eₓ) fixes distincts de l'actionneur et situés à distance l'un de l'autre, avec discrimination des temps de parcours, pour ainsi pour détecter différents types de mouvements de l'actionneur, incluant la rotation et la translation dans le but d'engendrer différents types de commandes basées sur lesdites informations de mouvement et générer différents types de mouvements d'objets virtuels dans des jeux exécutés dans ladite unité centrale de traitement.

14. Actionneur selon la revendication 13, **caractérisé en ce qu'**il comprend une partie de commande de déplacement se déplaçant par rapport à une autre partie, **en ce que** le ou chaque récepteur est fixé sur une première des parties et **en ce que** les émetteurs sont fixés sur la seconde des parties.

## Claims

1. Electronic game system, comprising on the one hand a fixed part having a central processing unit and a display device (D), and on the other hand at least one universal displaceable input actuator (M; 14; 16) that can be held in the player's hands and can generate standard control information for several electronic game programs that can all be executed by the processing unit, the actuator comprising directional control knobs and/or a joystick for generating displacement command information,
**characterised in that** it comprises, in addition to said knobs and/or joystick, means (Eₓ, Rᵢ, Eᵢ, Rₓ) of transmitting/receiving signals between said fixed part (D; 12) of the system and the said actuator (M), processing means capable of determining path time data of transmitted signals to detect different types of motion of the actuator, including rotation and translation, and for generating corresponding motion information, and control means that can apply different types of commands, based on said motion information, to the processing unit to act on the displacement of virtual objects displayed on the display device.

2. System according to claim 1, **characterised in that** the transmission/reception means provided on the fixed part of the system include transmitters or receivers provided close to the display device.

3. Game system according to either claim 1 or 2, **characterised in that** it comprises at least one receiver on the fixed part and at least one transmitter on the actuator, and **in that** the said transmitter (Eᵢ) is capable of transmitting actuator identification information to the central unit through the said receiver.

4. Game system according to anyone of claims 1 through 3, **characterised in that** it also comprises a transmitter (Eᵢ) on the actuator capable of transmitting actuation information determined from an actuatable element provided on the actuator, through a receiver on the fixed part, to the central unit.

5. Game system according to either claim 1 or 2, **characterised in that** it comprises a plurality of transmitters (Eₓ) on the fixed part and a plurality of receivers (Rᵢ) on the actuator.

6. System according to one of claims 1 to 5, **characterised in that** the processing means are capable of determining changes in the position of the actuator with five degrees of freedom.

7. System according to one of claims 1 to 5, **characterised in that** the processing means are capable of determining changes in the position of the actuator with six degrees of freedom.

8. System according to claim 8, **characterised in that** the actuator comprises three non-aligned transmitters (E₁-E₃) or receivers.

9. Universal displaceable input actuator (M; 14; 16) that can be held in hand, and can generate standard control information for a plurality of electronic game programs, that can be run by a central processing unit, the actuator comprising directional control knobs and/or a joystick for generating displacement command information,
**characterised in that** it comprises, in addition to said knobs and/or joystick, means of transmitting signals by wireless transmission from at least two transmitters (E₁-E₃) at a distance from each other on the actuator, the said transmitters transmitting signals whose path times are measurable to detect different types of motion of the actuator, including rotation and translation, for generating different types of commands, based on said motion information, and generating different types of motions of virtual objects in games being run in the central processing unit.

10. Actuator according to claim 9, **characterised in that** at least one transmitter (E₁-E₃) is capable of transmitting actuator identification information.

11. Actuator according to either claim 9 or 10, **characterised in that** at least one transmitter (E₁-E₃) is also capable of transmitting actuation information determined from an actuatable element provided on the actuator.

12. Actuator according to one of claims 9 to 11, **characterised in that** it comprises a displacement control part that moves with respect to another part, **in that** the transmitters are fixed on the displacement control part, and **in that** at least one receiver is fixed on the said other part.

13. Universal displaceable input actuator (M; 14; 16) that can be held in hand, and can generate standard control information for a plurality of electronic game programs, that can be run by a central processing unit, the actuator comprising directional control knobs and/or a joystick for generating displacement command information, **characterised in that** it comprises, in addition to said knobs and/or joystick, means of reception of distinct signals sent by wireless transmission from at least two fixed transmitters (Eₓ), distinct from the actuator and distant from each other, to at least one receiver (Rᵢ), while discriminating the path times, so as to detect different types of motion of the actuator, including rotation and translation, for generating different types of commands, based on said motion information, and generating different types of motions of virtual objects in games being run in the central processing unit.

14. Actuator according to claim 13, **characterised in that** it comprises a displacement control part being movable with respect to another part, and **in that** the receiver or each receiver is fixed on the displacement control part, and **in that** at least one transmitter is fixed on the said other part.

## Patentansprüche

1. Elektronisches Spielsystem, das einerseits einen festen Abschnitt, der eine zentrale Verarbeitungseinheit und eine Anzeigevorrichtung (D), und andererseits wenigstens ein bewegliches universelles Eingangsstellorgan (M; 14; 16) aufweist, das in der Lage ist, in der Hand gehalten zu werden und in der Lage ist, Standardsteuerinformationen zu erzeugen für eine Mehrzahl von elektronischen Spielprogrammen, von denen jedes geeignet ist, durch die zentrale Verarbeitungseinheit ausgeführt zu werden, wobei das Stellorgan Richtungssteuerungsknöpfe und/oder einen Joystick aufweist, um Bewegungssteuerungsinformationen zu erzeugen, **dadurch gekennzeichnet, dass** es zusätzlich zu den Knöpfen und/oder dem Joystick Signalausgabe-/Aufnahmeeinrichtungen (Eₓ, Rᵢ; Eᵢ, Rₓ) zwischen dem festen Abschnitt (D; 12) des Systems und dem Stellorgan (M) aufweist, Verarbeitungseinrichtungen aufweist, die in der Lage sind, Zeitdaten des Verlaufs der Signale zu bestimmen, die übertragen werden, um verschiedene Bewegungstypen des Stellorgans zu erfassen, einschließlich der Drehung und der Translation, und um entsprechende Bewegungsinformationen auszuarbeiten, und Steuerungseinrichtungen aufweist, die in der Lage sind, auf die zentrale Verarbeitungseinheit unterschiedliche Steuerungstypen aufzubringen, basierend auf den Bewegungsinformationen derart, um unterschiedliche Bewegungstypen von virtuellen Objekten, die auf der Anzeigevorrichtung angezeigt werden, zu erzeugen.

2. System nach Anspruch 1, **dadurch gekennzeichnet, dass** die Ausgabe-/ Aufnahmeeinrichtungen, die an dem festen Abschnitt des Systems vorgesehen sind, Sender oder Empfänger aufweisen, die in der Nähe der Anzeigevorrichtung vorgesehen sind.

3. Spielsystem nach Anspruch 1 oder 2, **dadurch gekennzeichnet, dass** es wenigstens einen Empfänger an dem festen Abschnitt und wenigstens einen Sender am Stellorgan aufweist, und dass der Sender (Eᵢ) in der Lage ist, zur zentralen Einheit über den Empfänger eine Identifikationsinformation des Stellorgans auszugeben.

4. Spielsystem nach einem der Ansprüche 1 bis 3, **dadurch gekennzeichnet, dass** es darüber hinaus an dem Stellorgan einen Sender (Eᵢ) aufweist, der in der Lage ist, zu der zentralen Einheit über einen Empfänger, der an dem festen Abschnitt vorgesehen ist, eine bestimmte Betätigungsinformation zu senden, ausgehend von einem betätigbaren Element, das an dem Stellorgan vorgesehen ist.

5. Spielsystem nach Anspruch 1 oder 2, **dadurch gekennzeichnet, dass** es eine Mehrzahl von Sendern (Eₓ) an dem festen Abschnitt und eine Mehrzahl von Empfängern (Rᵢ) an dem Stellorgan aufweist.

6. System nach einem der Ansprüche 1 bis 5, **dadurch gekennzeichnet, dass** die Verarbeitungseinrichtungen in der Lage sind, die Positionsunterschiede des Stellorgans gemäß fünf Freiheitsgraden zu bestimmen.

7. System nach einem der Ansprüche 1 bis 5, **dadurch gekennzeichnet, dass** die Verarbeitungseinrichtungen in der Lage sind, die Positionsunterschiede des Stellorgans gemäß sechs Freiheitsgraden zu bestimmen.

8. System nach Anspruch 1 oder 2, **dadurch gekennzeichnet, dass** das Stellorgan drei Sender (E₁-E₃) oder Empfänger, die nicht in Reihe sind, aufweist.

9. Bewegliches universelles Eingangsstellorgan (M; 14; 16), das in der Lage ist, von Hand gehalten zu werden, und in der Lage ist, Standardsteuerungsinformationen für eine Mehrzahl von elektronischen Spielprogrammen zu erzeugen, von denen jedes in der Lage ist, von einer zentralen Verarbeitungseinheit ausgeführt zu werden, wobei das Stellorgan Richtungssteuerungsknöpfe und/oder einen Joystick aufweist, um Bewegungssteuerungsinformationen zu erzeugen, **dadurch gekennzeichnet, dass** es über die Knöpfe und/oder den Joystick hinaus Sendeeinrichtungen von Signalen durch drahtlose Übertragung ausgehend von wenigstens zwei Sendern (Eₓ) aufweist, die voneinander beabstandet an dem Stellorgan angeordnet sind, wobei die Sender Signale senden, deren Laufzeiten geeignet sind, gemessen zu werden, um unterschiedliche Bewegungstypen des Stellorgans zu erfassen, einschließlich der Drehung und der Translation, um, basierend auf den Bewegungsinformationen, unterschiedliche Steuerungstypen zu erzeugen, und um unterschiedliche Bewegungstypen von virtuellen Objekten in den ausgeführten Spielen in der zentralen Verarbeitungseinheit zu erzeugen.

10. Stellorgan nach Anspruch 9, **dadurch gekennzeichnet, dass** wenigstens ein Sender (E₁-E₃) in der Lage ist, darüber hinaus eine Identifikationsinformation des Stellorgans zu senden.

11. Stellorgan nach Anspruch 9 oder 10, **dadurch gekennzeichnet, dass** wenigstens ein Sender (E₁-E₃) in der Lage ist, darüber hinaus eine bestimmte Betätigungsinformation ausgehend von einem betätigbaren Element zu senden, das an dem Stellorgan vorgesehen ist.

12. Stellorgan nach einem der Ansprüche 9 bis 11, **dadurch gekennzeichnet, dass** es einen Bewegungssteuerungsabschnitt aufweist, der sich bezüglich einem anderen Abschnitt bewegt, dass die Sender an einem ersten der Abschnitte befestigt sind und dass wenigstens ein Empfänger an dem zweiten der Abschnitte befestigt ist.

13. Bewegliches universelles Eingangsstellorgan (M; 14; 16), das in der Lage ist, von Hand gehalten zu werden, und in der Lage ist, Standardsteuerungsinformationen für eine Mehrzahl von elektronischen Spielprogrammen zu erzeugen, von denen jedes in der Lage ist, durch eine zentrale Verarbeitungseinheit ausgeführt zu werden, wobei das Stellorgan Richtungssteuerungsknöpfe und/oder einen Joystick aufweist, um Bewegungssteuerungsinformationen zu erzeugen, **dadurch gekennzeichnet, dass** es über die Knöpfe und/oder den Joystick hinaus Einrichtungen, um auf der Höhe wenigstens eines Empfängers (Rᵢ) verschiedene Signale zu empfangen, die durch drahtlose Übertragung ausgehend von wenigstens zwei verschiedenen festen Sendern (Eₓ) des Stellorgans gesendet werden und die voneinander beabstandet angeordnet sind, mit Zeitdiskriminierung der Verläufe, um somit unterschiedliche Bewegungstypen des Stellorgans zu erfassen, einschließlich der Drehung und der Translation, um, basierend auf den Bewegungsinformationen unterschiedliche Steuerungstypen zu erzeugen und um unterschiedliche Bewegungstypen von virtuellen Objekten in den ausgeführten Spielen in der zentralen Verarbeitungseinheit zu erzeugen.

14. Stellorgan nach Anspruch 13, **dadurch gekennzeichnet, dass** es einen Bewegungssteuerungsabschnitt aufweist, der sich bezüglich eines anderen Abschnitts bewegt, dass der oder jeder Empfänger an einem ersten der Abschnitte befestigt ist, und dass die Sender an dem zweiten der Abschnitte befestigt sind.
